(19) Europäisches Patentamt
European Patent Office
Office européen des brevets

(11) **EP 4 386 454 A1**

(12) **EUROPEAN PATENT APPLICATION**

(43) Date of publication:
**19.06.2024 Bulletin 2024/25**

(21) Application number: **22306843.8**

(22) Date of filing: **12.12.2022**

(51) International Patent Classification (IPC):
**G01V 99/00** (2024.01)

(52) Cooperative Patent Classification (CPC):
**G01V 20/00;** G01V 2210/64; G01V 2210/661

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOTALENERGIES ONETECH
92400 Courbevoie (FR)**

(72) Inventors:
• **MASSONNAT, Gérard
64018 PAU CEDEX (FR)**
• **RUIU, Jérémy
64018 PAU CEDEX (FR)**
• **LEMAY, Martin
64018 PAU CEDEX (FR)**
• **GAL, Cédric
64018 PAU CEDEX (FR)**

(74) Representative: **Plasseraud IP
66, rue de la Chaussée d'Antin
75440 Paris Cedex 09 (FR)**

(54) **METHOD FOR INTERCONNECTING GEOLOGICAL BODIES IN A PARAMETRIC SPACE FOR SIMULATION OF GEOLOGICAL RESERVOIRS**

(57) The present disclosure provides a method for interconnecting geological bodies in a subsoil, comprising:
/a/ receiving (101) a first geological body and a second geological body each comprising a first parametric surface comprising control points and knot vectors;
/b/ determining (102) a low control point (301) among the control points of the first parametric surface of each of the first geological body and the second geological body at a low vertical position in the subsoil;
/c/ modifying (103) the low control point (301) of the first parametric surface of the first geological body in such a way that said low control point (301) corresponds to the low control point (305) of the first parametric surface of the second geological body;
/d/ interconnecting (104) the first parametric surfaces of the first and second geological bodies by matching the low control points (301, 305) and the knot vectors.

FIG. 3

**Description**

The present disclosure belongs to the field of simulation of geological reservoirs.

More precisely, the present disclosure refers to a method for interconnecting geological bodies in a parametric space for building a sedimentary model for simulation of geological reservoirs, such as aquifers or hydrocarbon reservoirs.

**BACKGROUND OF THE DISCLOSURE**

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

The accurate determination of real subsoil structures and formations is essential for determining locations of geological reservoirs, such as aquifers or hydrocarbon reservoirs, in particular for determining positions where wells for hydrocarbon extraction or fluid injection in carbon storage projects should be drilled. When the composition and structure of a subsoil are simulated, it is crucial, for the predictivity of the simulation results (and thus for the accuracy of the industrial forecasts), to precisely model the properties of the subsoil and its evolution over time.

Building sedimentary models from sedimentary systems and geological bodies may be complex and often comprises the modeling of the composition of a subsoil in a pre-meshed space. In order to create continuous sedimentary systems and to reproduce the principal directions of the systems, different geological bodies must be assembled and amalgamed in the pre-meshed space.

Meshing of geological bodies prior to their assembly has several drawbacks as the size of the meshes and the orientation of the meshes induce a bias in the modeling. It then must be dealt with the connection of meshes of individual geological bodies during connection of said bodies. In addition, it may be difficult to accurately satisfy well constraints.

Accordingly, a need exists for properly interconnecting geological bodies when building a sedimentary model.

**SUMMARY OF THE DISCLOSURE**

The present disclosure provides a method for interconnecting geological bodies in a subsoil, the method comprising the following steps:

/a/ receiving a first geological body comprising a first parametric surface comprising a plurality of control points and at least one knot vector, and a second geological body comprising a first parametric surface comprising a plurality of control points and at least one knot vector;

/b/ determining a low control point among the plurality of control points of the first parametric surface of the first geological body at a low vertical position in the subsoil, and a low control point among the plurality of control points of the first parametric surface of the second geological body at a low vertical position in the subsoil;

/c/ modifying the low control point of the first parametric surface of the first geological body in such a way that said low control point corresponds to the low control point of the first parametric surface of the second geological body;

/d/ interconnecting the first parametric surfaces of the first and second geological bodies by matching the low control points of the first parametric surfaces of the first and second geological bodies, and by matching each of the at least one knot vector of the first parametric surface of the first geological body with a corresponding knot vector of the first parametric surface of the second geological body.

A geological body may be any type of geological object, such as a levee, a lobe, a channel, a fluvial body or a bar.

A geological body may further be any geological connector configured to interconnect individual geological objects. Such geological connectors may be for example diffluence connectors allowing connection of three channels, or divergence connectors allowing connection of two channels and a lobe.

A subsoil is a layer below the upper, outermost layer of soil. The subsoil may be a real subsoil.

A parametric surface is a surface (for instance, in Euclidean space) defined by a parametric equation. Each geological body may comprise one or more parametric surfaces.

The parametric surfaces may be NURBS surfaces. The NURBS concept allows easy modeling, saving, and simulation of parametric surfaces representing for example geological bodies.

NURBS surfaces are defined by control points $P_{i,j}$, with $i = 0, \dots n$; $j = 0, \dots n'$, the influence of which may be weighted by a set of piecewise polynomial functions $N_{i,k}$, $N'_{j,k}$, of degree k, and weights $w_{i,j}$.

The parametric definition of a NURBS surface $C(u,v)$ may be written as:

$$C(u,v) = \frac{\sum_{i=0}^{n} \sum_{j=0}^{n'} w_{i,j} N_{i,k}(u) N'_{j,k}(v) \overrightarrow{P_{i,j}}}{\sum_{i=0}^{n} \sum_{j=0}^{n'} w_{i,j} N_{i,k}(u) N'_{j,k}(v)}$$

$u,v$ are the two parametric directions of the parametric space. The piecewise polynomial functions $N_{i,k}$, $N'_{j,k}$ may be related to a knot vector. A knot vector is a set of non-decreasing parameter values called knots. The knot vector determines where in the parameter range the piecewise polynomial functions start and stop as the parametric surface is generated. The knot vector manages the continuity between the different piecewise polynomial functions. A modification of a knot vector may correspond for example to a modification of first and/or second derivatives of the piecewise polynomial functions.

The relation between the number of knots (m+1), the degree (k) of $N_{i,k}$ and $N'_{j,k}$, and the number of control points (n+1) is given as follows:

$$m = n + k + 1$$

Each NURBS surface comprises two knot vectors, one for each direction u, v of the parametric surface.

When two geological bodies are connected, the corresponding NURBS surfaces in the connection region have to be equal. Two NURBS surfaces are equal when the control points, the knot vectors and the piecewise polynomial functions are equal.

Matching in step /d/ may comprise inserting one or several knots into corresponding knot vectors of the parametric surfaces being connected, in such a way that both knot vectors comprise the same knots. This means that knots that are present in the first knot vector but not in the second knot vector may be inserted in the second knot vector, and vice versa.

For example, matching of a knot vector of a first parametric surface equal to [0 0 1 5] and a knot vector of a second parametric surface equal to [0 0 1 75] may yield a knot vector equal to [0 0 1 5 75].

Further details about NURBS may be found for example in David Rogers, "An Introduction to NURBS", 1st Edition, Elsevier, 2000.

Control points determine the shape of a parametric surface. Modification of a control point allows modifying a shape of the parametric surface.

For the sake of completeness, it is pointed out that control points are not points of or on a mesh and should not be confused with such points.

A low control point is a control point located in the lower region of the parametric surface of a geological body, i.e. at a low vertical position with respect to the geographical height. For example, the corresponding low control point may be located lower than the majority of control points of the corresponding parametric surface or lower than the center of mass / geometric center of said parametric surface.

Modifying the low control point of the first parametric surface of the first geological body may involve modifying at least one coordinate of said low control point.

In step /b/, a pair of "matchable" low control points is determined, i.e. two corresponding control points, in such a way that a low control point of the first parametric surface of the first geological body and a low control point of the first parametric surface of the second geological body fulfill one or more criteria. For example, one criterion may be that said two corresponding low control points are both part of a connection interface of the first parametric surfaces of the first and second geological bodies.

The modification in step /c/ is made in such a way that any major modification of the shape of the first parametric surface of the first geological body is minimized, i.e. in such a way that the first geological body keeps its global shape and geological properties and meaning.

Interconnecting the first parametric surfaces of the first and second geological body in step /d/ involves matching both surfaces.

Matching both low control points may involve matching coordinates of both low control points. Thus, after matching, both low control points may have identical coordinates.

The proposed method aims to respond to the drawbacks mentioned above by proposing a method for interconnecting geological bodies in a subsoil.

The method is innovative in that a low control point of a first parametric surface comprised by a first geological body is determined, modified and matched with a corresponding low control point of a first parametric surface comprised by a second geological body, and that corresponding knot vectors of both parametric surfaces are matched.

Thus, the method allows connecting geological bodies while preserving the global shape of the bodies being connected. The connection of the geological objects allows to obtain continuous sedimentary systems along the directions u,v.

Furthermore, the method allows preserving the continuity and derivability of the parametric surfaces being connected, more precisely of the polynomials defining the parametric surfaces.

Thus, the method allows obtaining geologically significant results.

A last step of the method may be to determine a real subsoil composition based on a result of step /d/, and output the real subsoil composition for future use in geophysical tools (allowing for example the determination of positions where wells for hydrocarbon extraction or fluid injection in carbon storage projects should be drilled).

In one embodiment, the low control point of the first parametric surface of the first geological body is modified, in step /c/, in such a way that a modification of a shape of the first parametric surface of the first geological body is minimized.

The modification of the first low control point is made in such a way that the global shape of the first parametric surface of the first geological body is preserved and that only small modifications are made to the shape of said parametric surface, i.e. in such a way that the geological properties are preserved during modification of said low control point.

In one embodiment, the modification of a shape of the first parametric surface of the first geological body is minimized by applying a gradient descent method.

A gradient descent method is an iterative optimization algorithm for finding a local minimum in a differentiable function. Repeated steps are taken in the opposite direction of a gradient at a current point, i.e. in a direction opposite to the steepest descent of the function.

The first low control point is modified while maintaining the shape of the surface with a minimum gradient descent, thus preserving the global shape of the first geological body.

For example, applying the gradient descent method may allow minimizing a deformation of the surface by minimizing squared distances between given points on the surface before modification and such points on the surface after modification.

In one embodiment, step /c/further comprises modifying a control point of the first parametric surface of the first geological body other than the low control point in order to correspond to a control point of the first parametric surface of the second geological body other than the low control point, and step /d/ further comprises matching said control point of the first parametric surface of the first geological body other than the low control point with said first control point of the first parametric surface of the second geological body other than the low control point.

The modification and matching of an additional pair of control points offer further degrees of freedom regarding the effort to preserve the global shape of the first geological object.

In one embodiment, at least one of the first and second geological bodies is chosen from a library of geological bodies.

Such a library may be created by genetic processes, i.e. said geological bodies may be determined from simulations and may be adapted for specific situations. The interconnection of a geological body chosen from the library may then be performed automatically with respect to a genetic aspect.

A connector chosen from the library may "know" which geological objects it can connect. For example, a connector may be designed to be a diffluence connector allowing connection of three channels, or a divergence connector allowing connection of two channels and a lobe.

Using such custom-fit geological bodies is helpful when trying to minimize any modification of geological bodies during interconnection.

In one embodiment, step /d/ further comprises creating a new parametric surface corresponding to the interconnected first parametric surfaces of the first and second geological bodies.

When matching the first surfaces of the first and second geological bodies, the resulting surfaces may be identical, or at least very similar, besides some numerical error margin.

Thus, when interconnecting the first parametric surfaces of two geological bodies, one new single surface may be created, thus reducing the complexity of modeling.

In one embodiment, the first geological body comprises at least one further parametric surface connected to the first parametric surface, and at least one constraint is applied to the first parametric surface and/or the at least one further parametric surface when modifying the low control point of the first parametric surface of the first geological body in step /c/.

A geological body may comprise several parametric surfaces enclosing a volume and defining the boundaries of a geological body.

When modifying the low point of the first parametric surface of the first geological body, one constraint may be that the volume enclosed by the parametric surfaces (i.e. by the first parametric surface and the at least one further parametric surface) stays "closed", i.e. no gap is created at interconnections of the at least two surfaces.

Thus, one constraint is that the volume enclosed by the surfaces has to stay closed.

A further constraint may be that the modification of the global shape of the geological body is minimized.

Another aspect of the disclosure refers to a method for interconnecting three geological bodies in a subsoil, wherein a third geological body comprises a first parametric surface comprising a plurality of control points and at least one knot vector, wherein the first parametric surfaces of the first and second geological bodies are interconnected according to the method as disclosed above, and wherein the first parametric surfaces of the second and third geological bodies are interconnected according to the method as disclosed above.

The method allows interconnecting three geological bodies.

For example, the method allows connecting two geological objects by the interposition of a geological connector.

Another aspect of the disclosure relates to a method for interconnecting four geological bodies in a subsoil, wherein a fourth geological body comprises a first parametric surface comprising a plurality of control points and at least one knot vector, and wherein the first parametric surfaces of the second and fourth geological bodies are connected according to the method as disclosed above.

The method allows interconnecting four geological bodies.

For example, the method allows connecting three geological objects by the interposition of a geological connector, allowing modeling of a bifurcation.

Another aspect of the disclosure relates to a device for interconnecting geological bodies in a subsoil, the device comprising:

- an interface for receiving a first geological body comprising a first parametric surface comprising a plurality of control points and at least one knot vector, and a second geological body comprising a first parametric surface comprising a plurality of control points and at least one knot vector;

- a circuit for determining a low control point among the plurality of control points of the first parametric surface of the first geological body at a low vertical position in the subsoil, and a low control point among the plurality of control points of the first parametric surface of the second geological body at a low vertical position in the subsoil;

- a circuit for modifying the low control point of the first parametric surface of the first geological body in such a way that said low control point corresponds to the low control point of the first parametric surface of the second geological body;

- a circuit for interconnecting the first parametric surfaces of the first and second geological bodies by matching the low control points of the first parametric surfaces of the first and second geological bodies, and by matching each of the at least one knot vector of the first parametric surface of the first geological body with a corresponding knot vector of the first parametric surface of the second geological body.

Said device may be configured to carry out the method disclosed above.

The proposed device aims to respond to the drawbacks mentioned above by proposing a device for interconnecting geological bodies in a subsoil.

The device is innovative in that a low control point of a first parametric surface comprised by a first geological body is determined, modified and matched with a corresponding low control point of a first parametric surface comprised by a second geological body, and that corresponding knot vectors of both parametric surfaces are matched.

Thus, the device allows connecting geological bodies while preserving the global shape of the bodies being connected.

Furthermore, the device allows preserving the continuity and derivability of the parametric surfaces being connected, more precisely of the polynomials defining the parametric surfaces.

Thus, the device allows obtaining geologically significant results, allowing for example the determination of positions where wells for hydrocarbon extraction or fluid injection in carbon storage projects should be drilled.

Another aspect of the invention relates to a non-transitory computer readable storage medium, having stored thereon a computer program comprising program instructions, the computer program being loadable into a data-processing unit and adapted to cause the data-processing unit to carry out a method for interconnecting geological bodies in a subsoil as described above.

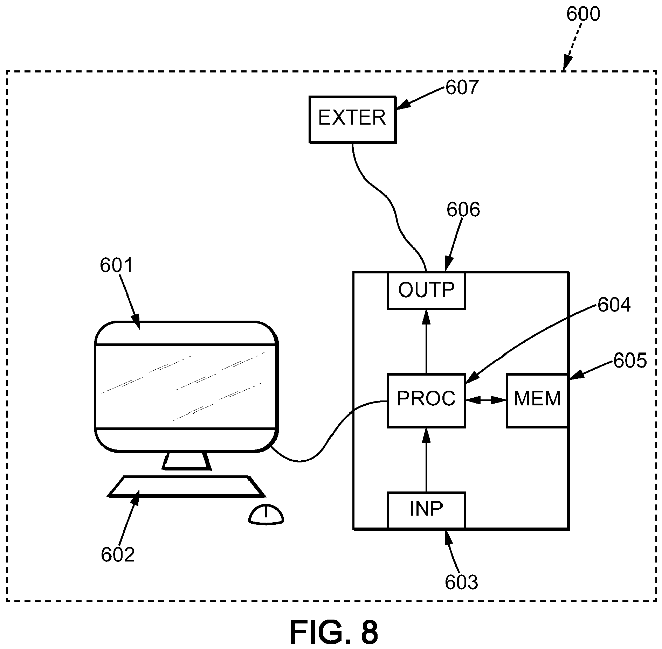

Fig. 8, described in detail below, can form the flowchart for the general algorithm of such a computer program.

## BRIEF DESCRIPTION OF THE DRAWINGS

The accompanying drawings, which are incorporated herein and form part of the specification, illustrate the present disclosure and, together with the description, further serve to explain the disclosure and to enable a person skilled in the pertinent art to make and use the disclosure. In the drawings, like reference characters indicate identical or functionally similar elements.

- Fig. 1 shows a schematic side view of a channel and a point bar.
- Fig. 2 shows schematic cross-sectional views of a channel and a point bar.
- Fig. 3 shows a flow-chart of a method for interconnecting the channel and the point bar of figs. 1 and 2.
- Fig. 4 shows a schematic side view of three channels connected by a diffluence connector.
- Figs. 5a and 5b show the effect of a carving operator and of an extracting operator.
- Fig. 6 shows a schematic representation of two channels.
- Fig. 7 shows a flow-chart of a method for modelling a process by deforming the two channels of fig. 6.
- Fig. 8 shows a non-transitory computer readable storage medium configured to implement the methods as described in figs. 3 and 7.

## DESCRIPTION OF PREFERRED EMBODIMENTS

In the following, a method for building a three-dimensional sedimentary model is provided. The method implements the connection of geological objects to build sedimentary systems, and the deformation of these sedimentary systems by reproducing geological processes.

A real subsoil can be represented by such a sedimentary model that reproduces the main features of the subsoil.

In this sedimentary model, basic geological objects such as levees, lobes, channels, fluvial bodies and bars may be represented by NURBS (or non-uniform Rational B-Splines) surfaces, wherein different NURBS surfaces are connected to each other on their respective boundaries in order to provide the shape of a given geological object with a closed volume.

NURBS is a mathematical model used in computer graphics for generating and representing curves and surfaces. It offers great flexibility and precision for handling both analytic (surfaces defined by common mathematical formulae) and modeled shapes.

A NURBS-surface is characterized by control points, two knot vectors (one for each direction u,v of the NURBS surface) and polynomial functions, typically having a polynomial degree of three. Two NURBS surfaces are equal when the control points, the knot vectors and the piecewise polynomial functions are equal.

Different geological objects may be connected to build more complex sedimentary systems. When a given sedimentary system is constructed, the geological objects of which the sedimentary system will be composed may be picked from a library of geological bodies (i.e. geological objects and connectors configured to interconnect two or more geological objects). Such a library may be created by genetic processes, i.e. said geological bodies may be determined from simulations and may be tailored for the construction of a specific sedimentary system.

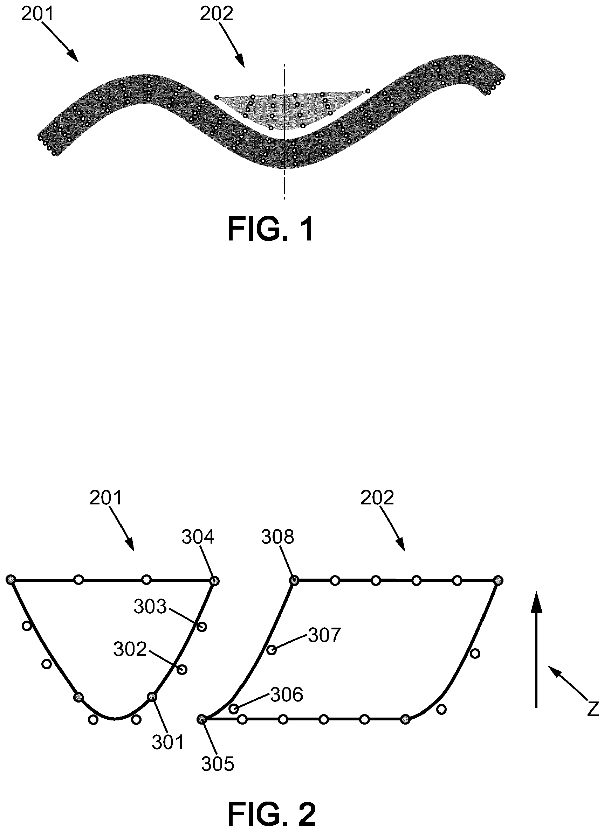

As an example of two geological objects intended to be connected, figure 1 show a top-view of NURBS surfaces 201 representing a channel and NURBS surfaces 202 representing a point bar. Figure 2 shows a cross sectional view, along the dashed line shown in figure 1, of the NURBS surfaces 201 representing the channel and the NURBS surfaces 202 representing the point bar.

The circles on the respective NURBS surfaces represent the control points.

The thickness of the first geological object, i.e. the channel, to be connected may be chosen such that it is equal to the thickness of the second geological object, i.e. the point bar, wherein the thickness is measured here in the vertical direction z.

A connection surface is identified in both geological objects in the region where the two geological objects are intended to be connected to each other. Both connection surfaces will be required to overlap and to be identical in order for the geological objects to be properly connected.

The two geological objects are then brought close to each other with the two connection surfaces facing each other. The connection surfaces of the two geological objects may not have the exact same shape, and each control point on the connection surface of the point bar may not have a counterpart at the same height z on the connection surface of the channel.

Thus, immediate connection of the channel to the point bar is not possible, since a connection of both geological objects in their current state would lead to deformation of the two objects and to "un-geological" forms. The connection surfaces would not overlap and discontinuities may occur between the NURBS surfaces 201, 202 of the geological objects.

Therefore, the connection surface of the channel has to be modified.

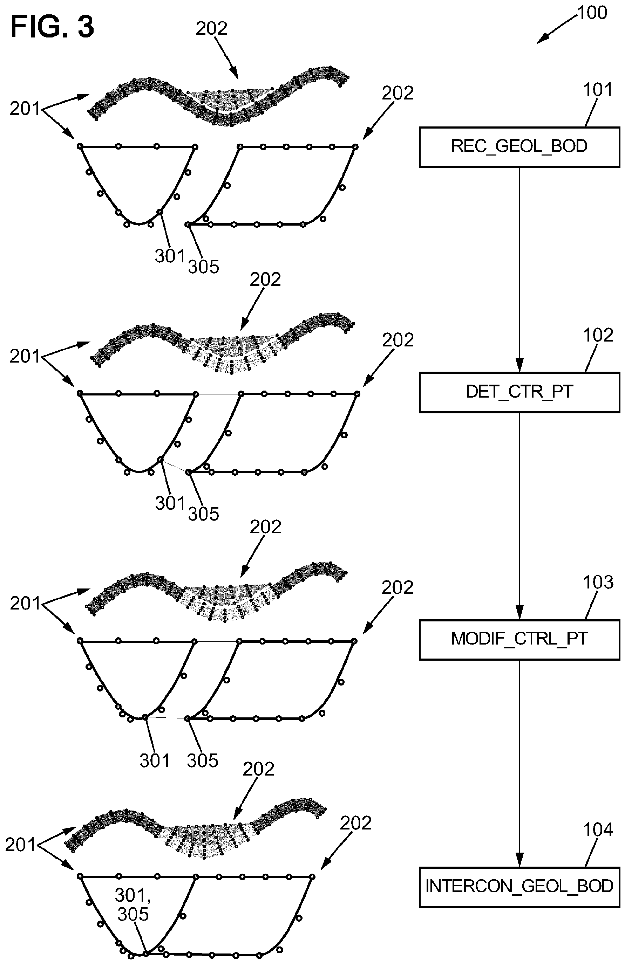

Figure 3 is a flow chart of a method to properly connect geological objects and/or connectors.

The geological objects to be connected are selected 101, here the channel and the point bar of figures 1 and 2.

A low control point 301 is identified 102 on the connection surface of the channel (represented by NURBS surfaces 201) and a low control point 302 on the connection surface of the point bar (represented by NURBS surfaces 202). The low control point 301, 302 is a control point located in the lower region of the surface of a geological object, i.e. at a low vertical position z with respect to the geographical height as shown in figure 2. For example, the corresponding low control point 301, 302 may be located lower than the majority of control points of the corresponding surface or lower than the center of mass / geometric center of the corresponding surface.

The low control point 301 of the channel is modified 103 and brought to the same height as the low control point 305 of the point bar. Both low control points 301, 305 now have the same z-coordinate. It is then ensured that other pairs control points 302, 303, 304, 306, 307, 308 on the connection surfaces are brought to the same respective height.

For the sake of completeness, it is pointed out that it is not necessary to create new control points as counterparts for each control point present on any of the two connection surfaces by adding additional control points to the respectively other connection surface, which would make the representation more complicated.

The modification 103 of the low control point is made in such a way that the modification of the global shape of the channel and in particular of the connection surface is minimized. This may be ensured for example by application of a gradient descent method, in which squared distances between the connection surface before and after modification are minimized.

Further constraints may be imposed on the connection surface or on other surfaces of the channel, in order to minimize any kinds of unwanted deformations of the connection surface of the channel.

Now, each control point 301, 302, 303, 304 on the connection surface of the channel has a corresponding counterpart 305, 306, 307, 308 at the same height on the connection surface of the point bar.

The channel and the point bar are then brought together at their connection interfaces, and the control points 301, 302, 303, 304 on the connection surface of the channel are matched 104 with the control points 305, 306, 307, 308 on the connection surface of the point bar, i.e. it is ensured that the respective pairs of corresponding control points 301 - 308 have the same three-dimensional coordinates. Furthermore, the two knot vectors of the connection surface of the channel are matched 104 with the two knot vectors of the connection surface of the point bar, i.e. it is ensured that corresponding knot vectors have identical elements.

Matching 104 of the knot vectors may comprise inserting one or several knots (i.e. elements) into corresponding knot vectors of the surfaces being connected, in such a way that both knot vectors comprise the same knots. This means that knots that are present in the first knot vector but not in the second knot vector may be inserted in the second knot vector, and vice versa.

For example, matching of a knot vector of a first surface equal to [0 0 1 5] and a knot vector of a second surface equal to [0 0 1 75] may yield a knot vector equal to [0 0 1 5 75].

The two connection surfaces are now identical, and a watertight connection is provided, i.e. no holes between different surfaces or unwanted major deformations of the surfaces of the resulting sedimentary system appear. The volumes of the geological objects are now continuously connected.

The method 100 can be reiterated for each further geological object that is connected, wherein the connection surface of any geological object that is connected later is brought into conformity with the connection surface of geological objects that were connected earlier.

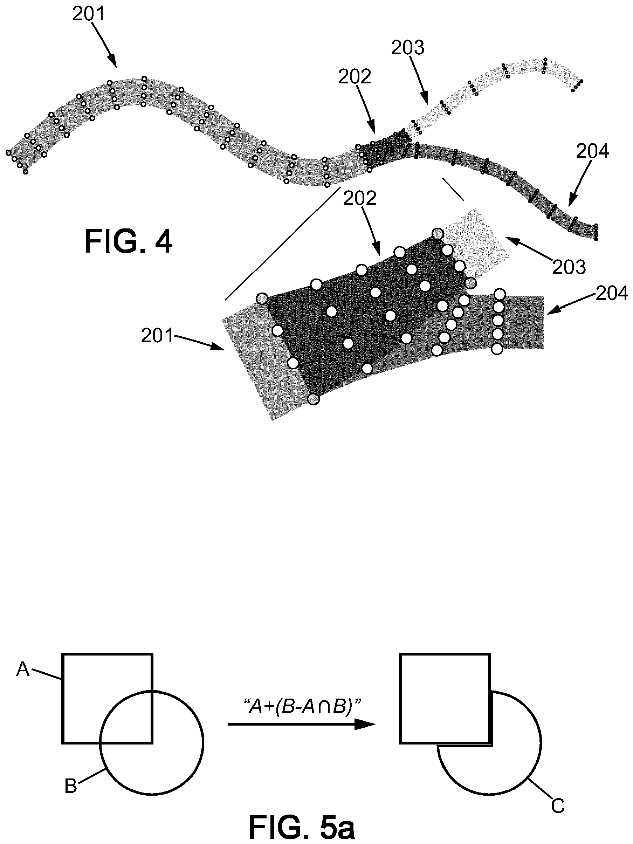

An example of a sedimentary system that may be constructed from a succession of NURBS surfaces representing respective geological bodies is shown in figure 4, wherein the geological bodies are represented by their respective NURBS surfaces 201, 202, 203, 204. Here, three channels (represented by NURBS surfaces 201, 203, 204) have been connected to each other by a diffluence connector (represented by NURBS surfaces 202). For the connection of the diffluence connector with each of the channels, the above-described method may be applied.

In order to build a sedimentary model representative of a subsoil, several such sedimentary systems may be deformed by reproducing geological processes. Such geological processes may be for example erosion or draping and may be modeled by Boolean operators.

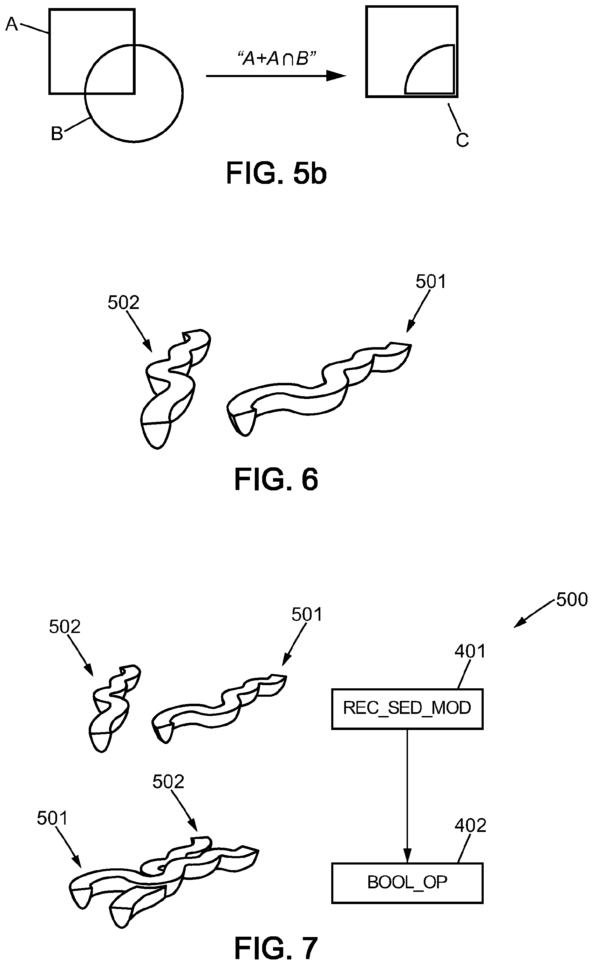

Figures 5a and 5b shows the impact of two Boolean operators that are considered as an example: carving operators and extracting operators.

Figure 5a shows a carving operation applied to two sedimentary systems A, B. The resulting sedimentary system C corresponds to the sedimentary system A, which is preserved entirely, and sedimentary system B, deprived of the intersection part of both interacting sedimentary systems A and B:

$$C = A + (B - A \cap B)$$

Here, "$A \cap B$" refers to an intersection of A and B, "+" refers to a sum of components "$A$" and "$(B - A \cap B)$", and "-" refers to a difference between components "$B$" and "$A \cap B$".

A carving operation allows modeling geological processes such as erosion or draping.

Figure 5b shows an extracting operation applied to two sedimentary systems A, B. The resulting sedimentary system C corresponds to the sedimentary system A, which is preserved entirely, and the intersection part of both sedimentary systems A, B:

$$C = A + A \cap B$$

Here, "$A \cap B$" refers to an intersection of A and B, and "+" refers to a sum of components "$A$" and "$A \cap B$".

An extracting operation allows including a part or the totality of one sedimentary system B inside another sedimentary system A. All parts of sedimentary system B that are outside of sedimentary system A are removed by the extracting operation.

Boolean operators act on the volume of the sedimentary systems. The NURBS surfaces delimiting the volume are then modified in order to delimit the new volume after application of the Boolean operator. NURBS surfaces are very effective as it is very simple to subtract volumes of geological objects.

The way in which the Boolean operators are applied depends on the type of sedimentary system, and in particular on the type of geological objects that are locally comprised by the sedimentary system. The way in which the Boolean operators are applied further depends on the geological time associated with each sedimentary system.

A geological time may correspond to the time of deposition of a sedimentary system. A greater geological time may correspond to a later deposition of a corresponding sedimentary system, and thus to a deposition spatially besides or on top of sedimentary systems deposited earlier, i.e. at smaller geological times.

Now, two sedimentary systems each comprising a plurality of geological objects are considered. Figure 6 shows by way of example a first channel represented by NURBS surfaces 501 and a second channel represented by NURBS surfaces 502. Each channel may be part of a respective sedimentary system.

A geological time may be associated with each of the sedimentary system, indicating at which time the corresponding sedimentary systems are deposited. The first channel is associated with a first geological time and the second channel is associated with a second geological time.

The type of geological process that is modeled and the type of Boolean operator that is applied may depend on the type of sedimentary systems that are interacting, in particular on the type of geological objects comprised by the sedimentary systems that are interacting, and further on the geological times of the involved geological objects.

Figure 7 is a flow chart of a method to model a geological process by deforming sedimentary systems in a subsoil.

The two above-mentioned sedimentary systems to be deformed are selected 401. The first channel is represented by NURBS surfaces 501 and the second channel is represented by NURBS surfaces 502.

Here, it is considered that the second channel is deposited before the first channel, i.e. the geological time associated with the second channel is smaller than the geological time associated with the first channel. In this case, a carving operator is applied, with the first channel being the sedimentary system A and with the second channel being the sedimentary system B.

Thus, the first channel will be preserved entirely, and the second channel will be deprived of the intersection part of both channels. The second channel will erode because the first channel cuts into it.

In another example not shown in the figures, the deformation of a channel and a lobe will be considered. If a channel and a lobe are deposited, the lobe will be eroded by the channel and the channel cuts into the lobe, which may be modeled by the carving operation. The lobe adapts to the shape of the channel, no matter whether the lobe was deposited before or after the channel. Then, in the above-mentioned equation of the carving operation, the lobe will be sedimentary system "B" and the channel will be sedimentary system "A".

In again another example not shown in the figures, the interaction of two lobes of different sizes is considered. A small second lobe may be located inside a first lobe. Parts of the second lobe may be located outside of the surfaces of the first lobe. Then, the parts of the second lobe located outside of the first lobe will be removed, which may be modeled by an extracting operation, wherein the second lobe will be sedimentary system "B" and the first lobe sedimentary system "A". This application of the extracting operation may occur no matter whether the first lobe or the second lobe was deposited first.

The volumes of the deformed sedimentary systems remain continuous and the interaction region of the sedimentary systems remains watertight, in the sense that no holes appear in the surfaces or between the volumes in the connection region.

The above-mentioned Boolean operations, geological processes and geological objects are considered by way of example. A skilled person would know how to apply the above-described methods to other cases.

A complete sedimentary may be built according to the method as described above. The sedimentary model may then be meshed with a three-dimensional mesh that may be adapted to the details of the sedimentary model.

Simulations may then be carried out with the meshed sedimentary model.

Figure 8 is a possible embodiment for a device that is configured to implement the method described in relation to figures 3 and 7.

In this embodiment, the device 600 comprise a computer, this computer comprising a memory 605 to store program instructions loadable into a circuit and adapted to cause circuit 604 to carry out the steps of the present invention when the program instructions are run by the circuit 604.

The memory 605 may also store data and useful information for carrying the steps of the present invention as described above.

The circuit 604 may be for instance:

- a processor or a processing unit adapted to interpret instructions in a computer language, the processor or the processing unit may comprise, may be associated with or be attached to a memory comprising the instructions, or

- the association of a processor / processing unit and a memory, the processor or the processing unit adapted to interpret instructions in a computer language, the memory comprising said instructions, or

- an electronic card wherein the steps of the invention are described within silicon, or

- a programmable electronic chip such as a FPGA chip (for « Field-Programmable Gate Array »).

This computer comprises an input interface 603 for the reception of data/model/input used for the above method according to the invention and an output interface 606 for providing a complete model. The output interface 606 may be coupled to any external device 607.

To ease the interaction with the computer, a screen 601 and a keyboard 602 may be provided and connected to the computer circuit 604.

It will be appreciated that the embodiments described above are illustrative of the invention disclosed herein and that various modifications can be made without departing from the scope as defined in the appended claims.

**Claims**

1. Method for interconnecting geological bodies in a subsoil, the method comprising the following steps:

/a/ receiving (101) a first geological body comprising a first parametric surface (201) comprising a plurality of control points (301, 302, 303, 304) and at least one knot vector, and a second geological body comprising a first parametric surface (202) comprising a plurality of control points (305, 306, 307, 308) and at least one knot vector;

/b/ determining (102) a low control point (301) among the plurality of control points (301, 302, 303, 304) of the first parametric surface (201) of the first geological body at a low vertical position in the subsoil, and a low control point (305) among the plurality of control points (305, 306, 307, 308) of the first parametric surface (202) of the second geological body at a low vertical position in the subsoil;

/c/ modifying (103) the low control point (301) of the first parametric surface (201) of the first geological body in such a way that said low control point (301) corresponds to the low control point (305) of the first parametric surface (202) of the second geological body;

/d/ interconnecting (104) the first parametric surfaces (201, 202) of the first and second geological bodies by matching the low control points (301, 305) of the first parametric surfaces (201, 202) of the first and second geological bodies, and by matching each of the at least one knot vector of the first parametric surface (201) of the first geological body with a corresponding knot vector of the first parametric surface (202) of the second geological body.

2. Method according to claim 1, wherein the low control point (301) of the first parametric surface (201) of the first geological body is modified, in step /c/, in such a way that a modification of a shape of the first parametric surface (201) of the first geological body is minimized.

3. Method according to claim 2, wherein the modification of a shape of the first parametric surface (201) of the first geological body is minimized by applying a gradient descent method.

4. Method according to any of the preceding claims, wherein step /c/ further comprises modifying a control point (302, 303, 304) of the first parametric surface (201) of the first geological body other than the low control point (301) in order to correspond to a control point (306, 307, 308) of the first parametric surface (202) of the second geological body other than the low control point (305), and wherein step /d/ further comprises matching said control point (302, 303, 304) of the first parametric surface (201) of the first geological body other than the low control point (301) with said first control point (306, 307, 308) of the first parametric surface (202) of the second geological body other than the low control point (305).

5. Method according to any of the preceding claims, wherein at least one of the first and second geological bodies is chosen from a library of geological bodies.

6. Method according to any of the preceding claims, wherein step /d/ further comprises creating a new parametric surface corresponding to the interconnected first parametric surfaces of the first and second geological bodies.

7. Method according to any of the preceding claims, wherein the first geological body comprises at least one further parametric surface connected to the first parametric surface (201), and wherein at least one constraint is applied to the first parametric surface and/or the at least one further parametric surface when modifying (103) the low control point (301) of the first parametric surface (201) of the first geological body in step /c/.

8. Method for interconnecting three geological bodies in a subsoil, wherein a third geological body comprises a first parametric surface (203) comprising a plurality of control points and at least one knot vector, wherein the first parametric surfaces (201, 202) of the first and second geological bodies are interconnected according to the method of any of the preceding claims, and wherein the first parametric surfaces (202, 203) of the second and third geological bodies are interconnected according to the method of any of the preceding claims.

9. Method according to claim 8 for interconnecting four geological bodies in a subsoil, wherein a fourth geological body comprises a first parametric surface (204) comprising a plurality of control points and at least one knot vector, and wherein the first parametric surfaces (202, 204) of the second and fourth geological bodies are connected according to the method of any of claims 1 - 7.

10. Device for interconnecting geological bodies in a subsoil, the device comprising:

- an interface for receiving (101) a first geological body comprising a first parametric surface (201) comprising a plurality of control points (301, 302, 303, 304) and at least one knot vector, and a second geological body comprising a first parametric surface (202) comprising a plurality of control points (305, 306, 307, 308) and at least one knot vector;
- a circuit for determining (102) a low control point (301) among the plurality of control points (301, 302, 303, 304) of the first parametric surface (201) of the first geological body at a low vertical position in the subsoil, and a low control point (305) among the plurality of control points (305, 306, 307, 308) of the first parametric surface (202) of the second geological body at a low vertical position in the subsoil;
- a circuit for modifying (103) the low control point (301) of the first parametric surface (201) of the first geological body in such a way that said low control point (301) corresponds to the low control point (305) of the first parametric surface (202) of the second geological body;
- a circuit for interconnecting (104) the first parametric surfaces (201, 202) of the first and second geological bodies by matching the low control points (301, 305) of the first parametric surfaces (201, 202) of the first and second geological bodies, and by matching each of the at least one knot vector of the first parametric surface (201) of the first geological body with a corresponding knot vector of the first parametric surface (202) of the second geological body.

11. A non-transitory computer readable storage medium (600), having stored thereon a computer program comprising program instructions, the computer program being loadable into a data-processing unit and adapted to cause the data-processing unit to carry out a method for interconnecting geological bodies in a subsoil according to any of claims 1 - 9.

FIG. 1

FIG. 2

# FIG. 3

| 100 |
| --- |
| **101** REC_GEOL_BOD |
| **102** DET_CTR_PT |
| **103** MODIF_CTRL_PT |
| **104** INTERCON_GEOL_BOD |

201

203

202

203

202

204

201

204

FIG. 4

A

B

"A+(B-A∩B)"

C

FIG. 5a

A

B

"A+A∩B"

C

**FIG. 5b**

502

501

**FIG. 6**

502

501

500

402

502

501

501

REC_SED_MOD

BOOL_OP

**FIG. 7**

FIG. 8

Europäisches Patentamt

European Patent Office

Office européen des brevets

# EUROPEAN SEARCH REPORT

Application Number

EP 22 30 6843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 819 682 A1 (TOTAL SE [FR]) 12 May 2021 (2021-05-12) | 1,4-11 | INV. G01V99/00 |
| Y | * abstract; claims 1-3; figures 3a-c * * paragraphs [0006], [0076], [0086], [0092], [0120], [0129], [0130], [0133], [0139] * ----- | 2,3 | |
| Y | PARQUER MARION N ET AL: "Reconstruction of Channelized Systems Through a Conditioned Reverse Migration Method", MATHEMATICAL GEOSCIENCES, SPRINGER BERLIN HEIDELBERG, BERLIN/HEIDELBERG, vol. 49, no. 8, 21 August 2017 (2017-08-21), pages 965-994, XP036370104, ISSN: 1874-8961, DOI: 10.1007/S11004-017-9700-3 [retrieved on 2017-08-21] * abstract * * last paragraph; page 990 * ----- | 2,3 | |
| Y | US 9 430 870 B2 (MUSETH KEN [SE]; BREEN DAVID [US]; CALIFORNIA INST OF TECHN [US]) 30 August 2016 (2016-08-30) * abstract * * column 16, lines 55-60 * * column 17, lines 38-41 * ----- | 3 | TECHNICAL FIELDS SEARCHED (IPC) G01V |

The present search report has been drawn up for all claims

| Place of search | Date of completion of the search | Examiner |
|---|---|---|
| The Hague | 1 May 2023 | Fernandes, Paulo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6843

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2023

| Patent document cited in search report | | Publication date | Patent family member(s) | | Publication date |
|---|---|---|---|---|---|
| EP 3819682 | A1 | 12-05-2021 | EP 3819682 | A1 | 12-05-2021 |
| | | | US 2021141112 | A1 | 13-05-2021 |
| US 9430870 | B2 | 30-08-2016 | US 2004170302 | A1 | 02-09-2004 |
| | | | US 2008074419 | A1 | 27-03-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID ROGERS.** An Introduction to NURBS. Elsevier, 2000